Europäisches Patentamt

European Patent Office

Office européen des brevets

(19)

(11) EP 1 354 646 A1

(12) EUROPEAN PATENT APPLICATION

(43) Date of publication:
22.10.2003 Bulletin 2003/43

(51) Int Cl.$^7$: **B09C 1/06**, B09B 3/00

(21) Application number: 03006754.0

(22) Date of filing: 25.03.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK RO**

(30) Priority: **17.04.2002 JP 2002114884
19.08.2002 JP 2002238371**

(71) Applicant: **KABUSHIKI KAISHA KOBE SEIKO SHO
Kobe-shi, Hyogo 651-8585 (JP)**

(72) Inventors:
• **Harada, Takao, Kobe Corporate Research Labs.
Nishi-ku, Kobe-shi, Hyogo 651-2271 (JP)**

• **Michishita, Haruyasu
Chuo-ku, Kobe-shi, Hyogo 651-8585 (JP)**
• **Tanaka, Hidetoshi,
Kobe Corporate Research Labs.
Nishi-ku, Kobe-shi, Hyogo 651-2271 (JP)**
• **Tamazawa, Hiroshi,
Kobe Corporate Research Labs.
Nishi-ku, Kobe-shi, Hyogo 651-2271 (JP)**
• **Sugitatsu, Hiroshi,
Kobe Corporate Research Labs.
Nishi-ku, Kobe-shi, Hyogo 651-2271 (JP)**

(74) Representative: **Müller-Boré & Partner
Patentanwälte
Grafinger Strasse 2
81671 München (DE)**

(54) **Method of treating heavy metal and/or organic compound**

(57) The present invention provides a method of purifying polluted soil and/or burned ash containing heavy metals and/or organic compounds with a higher throughput than a conventional method. In this method, polluted soil and/or burned ash is dried by, for example, a rotary dryer (1) so that the moisture content is 5% by mass or less, preferably 3% by mass or less, and then large lumps having a particle diameter of 10 mm or more are removed by a vibrating screen (2). Only an undersize portion is formed into a briquette having a volume of about 6 cm$^3$ by a press molding machine (3). The briquette is charged in a rotary hearth furnace (4) together with the large lumps, and heated in the furnace (4) to remove or detoxify the heavy metals and organic compounds by evaporation with high efficiency.

FIG. 1

EP 1 354 646 A1

**Description**

The present invention relates to a method of purifying soil and/or burned ash containing heavy metals and/or organic compounds. Particularly, the present invention relates to a method of removing or detoxifying heavy metals and/or organic compounds contained in soil and/or burned ash.

In recent years, various heat treatment methods have been proposed as methods of removing or detoxifying pollutants contained in soil and/or burned ash. Herein, the pollutants include heavy metals such as cadmium (Cd), lead (Pb), hexavalent chromium ($Cr^{6+}$), arsenic (As), mercury (Hg), and the like, organochlorine compounds such as dioxines, and the like, other organic pollutants (volatile organic compounds VOC and persistent organic pollutants POPs), and the like.

As a heat treatment method for purifying soil polluted with an arsenic compound, a method is used, in which a mixture of the soil and a reducing agent is heated, or the soil is heated in the presence of a reducing gas to reduce and evaporate the arsenic compound from the soil at a low temperature. In this method, carbon or ammonium sulfate is used as the reducing agent, and carbon dioxide, carbon monoxide, ammonia, or methane gas is used as the reducing gas.

However, when only the reducing agent such as carbon is added, the amount of the CO gas generated is limited, and thus reduction of the arsenic compound is not sufficiently promoted, thereby quite possibly failing to achieve a high rate of removal.

A rotary kiln is used as a waste reclamation furnace. For example, residual soil is molded by an extrusion granulator, burned by an outside heating type or inside heating type rotary kiln, and used as burned modified soil.

However, in the use of the outside heating type rotary kiln, heat is mainly transferred by conductive heat transfer through the furnace wall, causing difficulties in rapid heating. On the other hand, in the use of the inside heating type rotary kiln, heat is mainly transferred by radiant heat transfer, but a heat transfer area is small as compared with the ratio of the occupied area of a material in the furnace, thereby causing difficulties in rapid heating. Therefore, both the inside and outside heating types have a fault that heat treatment requires a long time, and the apparatus used is greater than enough as compared with its throughput. Also, in a rotary kiln, a gas discharge port is limited to one position, and thus the harmful materials removed by evaporation cannot be separately recovered according to the types of the materials.

Another method is disclosed, in which a reducing agent containing a formic acid and/or oxalic acid salt is added to a material to be treated, and the resultant mixture is heated to reduce heavy metals or organochlorine compounds, to remove or detoxify the heavy metals or organochlorine compounds. Besides the rotary kiln, a fluidized bed type heating furnace can be used.

However, this method requires a relatively expensive formic acid and/or oxalic acid salt to increase the treatment cost, causing a problem of practicability. In the use of the fluidized bed type heating furnace, heat is mainly transferred by convective heat transfer between a heated gas and a material to be treated, and a heat transfer area is extremely larger than the rotary kiln to permit the realization of rapid uniform heating. However, when the material to be treated contains a lump material, the material must be previously ground because the material to be treated, which can be used in the fluidized bed, is limited to a powdery material. Also, a large amount of dust contained in the exhaust gas must be treated, a countermeasure against abrasion of the furnace wall is required, and the temperature cannot be set too high because adhesion easily occurs. Therefore, the fluidized bed type has low handleability and thus has the problem of increasing the treatment cost.

The present invention has been achieved in consideration of the above-described situation, and an object of the present invention is to provide a method of purifying soil and/or burned ash with a higher throughput than a conventional method, the method comprising heat-treating soil or burned ash containing heavy metals and/or organic compounds.

In a first aspect of the present invention, a method of treating heavy metals and/or organic compounds comprises a heating step of heating a material containing heavy metals and/or organic compounds, in a radiant rapid heating furnace to purify the material.

In a second aspect of the present invention, a method of treating heavy metals and/or organic compounds comprises an agglomeration step of agglomerating at least a portion of a material to be treated, which contains heavy metals and/or organic compounds, to form agglomerates, and a heating step of heating the agglomerates and the unagglomerated residue of the material in a radiant rapid heating furnace to purify the material.

In a third aspect of the present invention, a method of treating heavy metals and/or organic compounds further comprises a screening step of screening a material to be treated to separate the material into an oversize portion and an undersize portion before an agglomeration step, the undersize portion being supplied to the agglomeration step, and the oversize portion being supplied to a heating step without the agglomeration step.

In a fourth aspect of the present invention, a method of treating heavy metals and/or organic compounds comprises a mixing step of mixing a carbonaceous reducing agent and an metal oxide-containing material with a material to be treated, which contains heavy metals and/or organic compounds, and a heating step of heating the resultant mixture in a heating furnace to purify the material.

In a fifth aspect of the present invention, a method of treating heavy metals and/or organic compounds comprises heating a material to be treated at an ambient temperature of 700°C or more at least in the second half of a heating step.

In a sixth aspect of the present invention, a method of treating heavy metals and/or organic compounds comprises heating a material to be treated at an ambient temperature of 700°C or less in the first half of a heating step.

In a seventh aspect of the present invention, in a method of treating the heavy metals and/or organic compounds, a radiant rapid heating furnace is a rotary hearth furnace.

The radiant rapid heating furnace comprises a hearth (or grate) continuously or intermittently horizontally moved, and a heating furnace body which covers an upper portion of the hearth (or grate). In the radiant rapid heating furnace, soil and/or burned ash as the material is placed on the hearth (or grate), and mainly radiantly heated from above by passing through the heating furnace body together with the hearth. Another furnace may be used, in which the soil and/or burned ash placed on the hearth is moved by a scraper without movement of the hearth.

Examples of the radiant rapid heating furnace include a moving-bed furnace, a tunnel kiln, and the like, and examples of the moving-bed furnace include a circular rotary hearth furnace, and a linear or grate-type furnace. A multi-hearth furnace is also included in the radiant rapid heating furnace.

A heat transfer mechanism of the radiant rapid heating furnace includes radiant heat transfer from a space (combustion gas and the furnace wall) above the material to the surface of the material, and conductive heat transfer in the material from the upper surface of the material to the lower surface thereof. The radiant heat transfer rate is proportional to a difference between the fourth powers of the absolute temperatures of the heated material and the material to be heated, while the conductive heat transfer rate is proportional to a temperature gradient from the upper surface and the lower surface of the material. Therefore, conductive heat transfer is generally a rate-determining step.

By using the radiant rapid heating furnace as the heating furnace, the material can be thinly placed on the hearth (or grate). The thickness of the material placed on the hearth (or grate) depends upon the type of the charger used, but the thickness can be generally minimized to about 10 mm. Therefore, the area (the upper surface area of the material) of radiant heat transfer from the heated material (combustion gas and the furnace wall) in the upper space to the material can be increased to significantly increase the amount of radiant heat transfer.

Furthermore, the layer of the material to be heated is thin, and thus heat transferred to the upper surface of the material by radiant heat transfer is transferred to the lower surface of the material layer to be heated by conductive heat transfer in the rate-determining step within a short time, thereby achieving rapid uniform heating of the material. Therefore, the whole material is uniformly rapidly heated to remove or detoxify the heavy metals or organic compounds adhering to the surface of the material (soil or/or burned ash) within a short time.

The inside of the radiant rapid heating furnace is divided into zones by the furnace walls so that the temperature and atmosphere of each of the zones can easily be controlled. Consequently, the heavy metals can easily be reduced and evaporated by suppressing an oxidizing atmosphere in the furnace.

On the other hand, in a heating system using a conventional inside heating type rotary kiln, radiant heat transfer from the heated material (combustion gas and the furnace wall) in the upper space to the surface of the material is mainly performed. However, in heating by the rotary kiln, the ratio (occupancy ratio) of a sectional area of the material to the total sectional area of the kiln is 5 to 17% in an ordinary operation. For example, in the kiln having an inner diameter of 1 m, the maximum thickness of the material in the kiln reaches 95 to 230 mm (average thickness of about 50 to 150 mm). Therefore, the heat transfer area (the upper surface area of the material) relative to the amount of the material staying in the kiln, is extremely smaller than that in the radiant rapid heating furnace. Although the rate-determining step of conductive heating is absent from the radiant rapid heating furnace because the material is agitated by rolling the kiln, the heating rate is significantly lower than that in the radiant rapid heating furnace, and thus a long time is required for heating.

Preferably, at least a portion of the soil and/or burned ash containing the heavy metals and/or organic compounds is agglomerated to form agglomerates, and the agglomerates and the residue of the soil and/or burned ash are placed on the hearth (or grate) of the radiant rapid heating furnace. Agglomeration of at least a portion of the soil and/or burned ash increases the packing density of particles of the soil and/or burned ash in the agglomerates, and thus the packing density of the whole layer of the material is also increased as compared with a case in which the whole of the soil and/or burned ash is placed on the hearth (or grate) without agglomeration, thereby further increasing the conductive heat transfer rate. Furthermore, handling after heating, such as transport or the like, is facilitated, and the agglomerates having high strength are preferably used as a roadbed and an aggregate.

Furthermore, the soil and/or burned ash containing the heavy metals and/or organic compounds frequently contains a large amount of moisture, and is thus difficult to handle without any treatment. Therefore, at least a portion of the soil and/or burned ash is preferably dried before the agglomeration.

Also, the soil and/or burned ash containing the heavy metals and/or organic compounds frequently contains large lumps, and thus the large lumps are preferably previously removed by a screen having a predetermined screen mesh (for example, 10 mm) for protecting an agglomerator used for agglomeration. After the large lumps are removed, only un undersize portion is agglomerated, and the resultant agglomerates and the oversize portion containing the large lumps are preferably charged in the radiant rapid heating furnace. In the large lumps, most of pollutants such as the heavy metals and/or organic compounds adhere only to the surfaces of the lumps, and thus the pollutants can easily be removed or detoxified by heating without grinding, to cause no problem.

The radiant rapid heating furnace preferably has at least two exhaust gas discharge ports so that the exhaust gas is separately discharged from the discharge ports. Therefore, the exhaust gas containing heavy metals having different evaporation temperatures can be separately discharged, thereby facilitating a subsequent treatment of the exhaust gas and reclamation of recovered materials.

Furthermore, a carbonaceous reducing agent and a metal oxide-containing material are preferably mixed with the soil and/or burned ash containing the heavy metals and/or organic compounds, and then the resultant mixture is charged in the heating furnace. Therefore, in heating in the heating furnace, a carbon content (C) in the carbonaceous reducing agent reacts with the metal oxide ($M_xO_y$) to activate the generation of CO gas, as shown by the following reaction formula (1):

$$M_xO_y + zC \rightarrow M_xO_{(y-z)} + zCO \tag{1}$$

As a result, reduction of the heavy metal oxides is promoted to bring the heavy metals into a volatile state, thereby accelerating evaporation removal.

In this method, reduction can be promoted without an increase in the heating rate, and thus the heating furnace is not limited to the radiant rapid heating furnace. Thus, the method can also be applied to a conventional rotary kiln.

At least in the second half of heating, the ambient temperature in the heating furnace (heating step) is preferably 700°C or more. Therefore, As and Hg which evaporate at relatively low temperatures, and Pb and Cd which evaporate at higher temperatures, can be evaporated and removed from the material.

Furthermore, in the first half of heating, the ambient temperature in the heating furnace (heating step) is preferably 700°C or less. Therefore, low-temperature volatile metals such as As and Hg, and high-temperature volatile metals such as Pb and Cd can be separately evaporated and removed in the first half and the second half, respectively, and thus the low-temperature and high-temperature heavy metals can be separately recovered, thereby facilitating final treatment and reclamation after recovery.

Furthermore, a rotary hearth furnace is recommended as the heating furnace. In this case, the agglomerates can be treated without pulverization, and the inside of the furnace can easily be divided, thereby facilitating separated recovery of the volatile materials removed by evaporation from the treated material.

Fig. 1 is a drawing schematically showing a construction of an apparatus used in example 1;
Fig. 2 is a vertical sectional view of a rotary hearth furnace used in example 1; and
Fig. 3 is a graph showing the relation between the elapsed time from sample charging and the CO concentration of an atmosphere gas for heating each sample containing polluted soil in example 2.

An embodiment of the present invention will be described in detail below with reference to examples.

Example 1

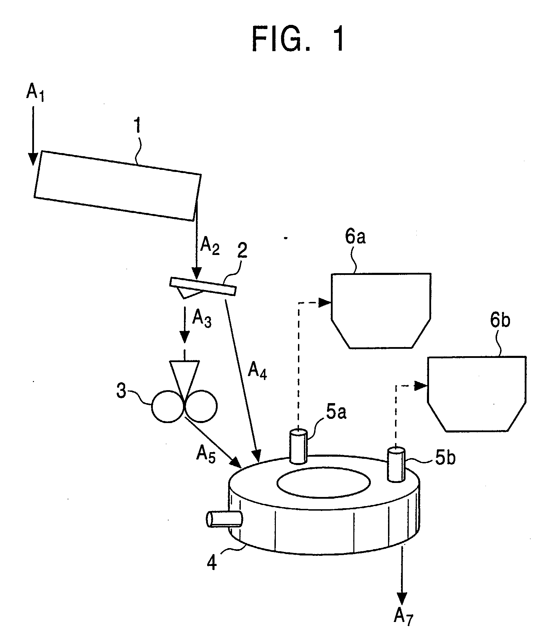

Fig. 1 is a drawing schematically showing a construction of an apparatus used for a method of treating heavy metals and/or organic compounds according to an embodiment of the present invention. In Fig. 1, reference numeral 1 denotes a dryer for drying polluted soil $A_1$ as a material to be treated; reference numeral 2, a screen for screening soil $A_2$ dried by the dryer 1; reference numeral 3, an agglomerator for agglomerating an undersize portion $A_3$ put through the screen 2; and reference numeral 4, a radiant rapid heating furnace for heating agglomerates $A_5$ produced by agglomeration by the agglomerator 3 and an oversize portion $A_4$ put through the screen 2. Also, reference numerals 5a and 5b denote exhaust gas discharge ports provided at two positions of the radiant rapid heating furnace 4, and reference numerals 6a and 6b denote dust collectors connected to the exhaust gas discharge ports 5a and 5b, respectively, through exhaust gas ducts (not shown).

As the polluted soil $A_1$, soil containing pollutants such as heavy metals such as cadmium (Cd), lead (Pb), hexavalent chromium ($Cr^{6+}$), arsenic (As), mercury (Hg), and the like, organochlorine compounds such as dioxines, and the like, and other organic pollutants is treated.

When the polluted soil $A_1$ has a high moisture content, the moisture content is preferably previously decreased to 5% by mass or less, more preferably 3% by mass or less, by drying with the dryer 1. This is because handling is facilitated by drying. Also, screening is also facilitated by drying. Furthermore, drying before agglomeration has not only the effect of preventing the occurrence of excessive bursting even when the agglomerates $A_5$ are charged in the heating furnace 4, but also the effect of decreasing the time required for drying the agglomerates $A_5$ in the heating furnace 4 to improve a throughput, and saving the fuel required for drying in the heating furnace 4. Of course, the dryer 1 is unnecessary for treatment of soil $A_1$ having a low moisture content. The drying step may be omitted according to a treatment scale, and thus the soil may be dried in the heating furnace. A treatment without agglomeration has the low probability of bursting, but drying is preferably performed to an extent which causes no trouble such as clogging in charging in the heating furnace. In a treatment without agglomeration, more preferably the density of the soil $A_1$ is increased by compression with a press after charging in the furnace to improve a heat transfer efficiency, or a groove is formed in the surface of the soil $A_1$ by a scraper or the like to increase a heat receiving area. The type of the dryer 1 is not limited, and any one of a rotary dryer type, a fluidized bed dryer type, and the like may be used. However, in this example, a simple rotary dryer with rich performance is used (drying step).

Instead of drying before agglomeration, drying of the agglomerates $A_5$ after agglomeration has the effect of suppressing bursting in the heating furnace 4, improving productivity and decreasing fuel consumption. However, in this case, the soil containing a large amount of moisture is difficult to agglomerate. In addition, while drying can be carried out with a simple dryer such as a rotary dryer or the like before agglomeration, a relatively expensive apparatus such as a moving-bed dryer or the like is required for drying the agglomerates $A_5$ in a stationary state after agglomeration so as to prevent bursting and powdering.

When the soil $A_1$ ($A_2$) contains large lumps, the large lumps are preferably removed by the screen 2 after drying in order to protect the agglomerator 3. For example, a vibrating screen can be used as the screen 2, and the screen mesh is 10 mm in consideration of the protection of the agglomerator and the screening efficiency. In a conventional technique, the large lumps $A_4$ on the screen 2 are ground, and then mixed with the undersize portion $A_3$ or used for other applications. However, in this example, the large lumps $A_4$ are charged in the heating furnace 4 together with the agglomerates $A_5$ after agglomeration described below (screening step).

The undersize portion $A_3$ from which the large lumps $A_4$ are moved by the screen 2 is preferably agglomerated by the agglomerator 3 to produce the agglomerates $A_5$ having a predetermined size. The type of the agglomerator 3 is not limited, and any one of a press molding machine, an extrusion molding machine, tumbling granulators such as a dish-shaped granulator and drum granulator, an agitating granulator, a fluidized bed granulator, and the like may be used. Particularly, the press molding machine, the extrusion molding machine, or the tumbling granulator, which can produce agglomerates with a high density, is preferably used. Particularly, a press agglomerator capable of achieving a high density is recommended. Furthermore, a binder and moisture may be added to the undersize portion $A_3$ before agglomeration according to demand. Although the shape and size of the agglomerates $A_5$ are not limited, a pillow-shaped briquette of 39 mm x 20 mm x 12 mm (volume of about 6 $cm^3$) is formed by compression molding using a press agglomerator, and used in this example (agglomeration step).

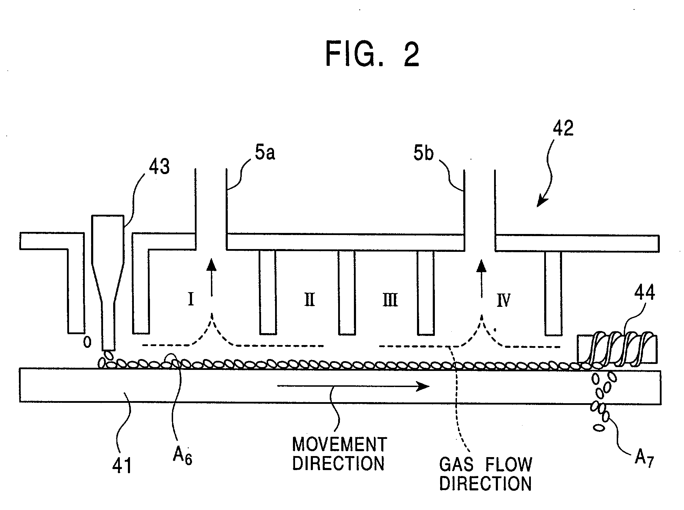

The agglomerates $A_5$ agglomerated as described above are charged in the radiant rapid heating furnace 4 together with the large lumps $A_4$ remaining on the screen 2. As the radiant rapid heating furnace 4, a rotary hearth furnace is used in this example. Fig. 2 is a vertical sectional view showing the rotary hearth furnace 4 used in this example. The rotary hearth furnace 4 comprises a doughnut-like hearth 41 which horizontally rotates, a heating furnace body 42 which covers the upper portion of the hearth 41, a charger 43 for charging the agglomerates $A_5$ and the large lumps $A_4$ (generically named a "material $A_6$" to be heated) onto the hearth 41, and a discharger 44 for discharging the heated material $A_6$ (purified soil $A_7$) after heating from the hearth 41 to the outside. The material $A_6$ is charged onto the hearth 41 by the charger 43 so that the thickness is about 1 to 2 times as large as the thickness (in this example, 12 mm) of the agglomerates $A_5$. In this example, the heating furnace body 42 is divided into four zones (I, II, III, and IV zones) along the movement direction of the hearth 41, and a combustion burner (not shown) is provided in each of the zones so that the ambient temperature of each zone can be precisely controlled. In addition, the ambient temperatures (the temperature near the material $A_6$) of the two zones (I and II zones) in the first half are 700°C or less, and the ambient temperatures (the temperature near the material $A_6$) of the two zones (III and IV zones) in the second half are 700 to 1250°C. Furthermore, the exhaust gas discharge ports 5a and 5b are provided in the first zone (I zone) and last zone (IV zone), respectively, so that exhaust gas from the two zones (I and II zones) in the first half, and exhaust gas from the two zones (III and IV zones) in the second half can be separately discharged. During passage through the heating furnace 4 with rotation of the hearth 41, the material $A_6$ is heated to 700°C or less in the two zones (I and II zones) in the first half to first remove As and Hg which evaporate at relatively low temperatures. Then, in the two zones (III and IV zones) in the second half, the material $A_6$ is heated to the maximum temperature of about 1250°C to remove Pb and Cd which evaporate at higher temperatures. The conceivable reason why the heavy metals can easily be evaporated only by simply heating the material $A_6$ is that in heating the material, the organic materials contained in the soil are decomposed to generate CO gas, and thus the heavy metal oxides are converted to a volatile state by reduction, as described below with reference to example 2. In this example, fly ash containing a high concentration of As can be recovered from the dust collector 6a connected to the exhaust gas discharge port 5a in the first half, and fly ash containing a high concentration of Pb can be recovered from the dust collector 6b connected to the exhaust gas discharge port 5b in the second half. In a treatment method using a conventional rotary kiln, the inside of the furnace cannot be divided into zones from the viewpoint of structure, and thus, unlike in this example, the temperature cannot be easily precisely controlled in each zone in the furnace, and exhaust gas cannot be discharged from a plurality of positions. Furthermore, in the conventional method, the gas atmosphere in the furnace cannot be controlled to cause difficulties in evaporating heavy metals by reduction. After the material $A_6$ passes through the IV zone in the heating furnace body 42, the material $A_6$ is discharged as the purified soil $A_7$ to the outside by the discharger 44. In this example, when the retention time of the material $A_6$ at an average ambient temperature of 1200°C is 12 minutes, the Pb concentration of the material $A_6$ of 160 mg/kg before heating is decreased to the Pb concentration of the purified soil $A_7$ of 20 mg/kg after heating. Although not confirmed at present, it is thought that hexavalent chromium ($Cr^{6+}$) in the material $A_6$ is detoxified to a valence state (a metal, bivalent, or trivalent) other than a hexavalent state, which is hard to elute, and the organochlorine compounds such as dioxine are also detoxified by heating decomposition (heating step).

Another soil containing 6800 mg/kg of Pb and 59 mg/kg of As was heated by the same method as described above, and then an elution test was carried out based on Notification No. 13 of Environment Agency. As a result, the elution amounts of Pb and As were as low as < 0.01 mg/l (quantitative lower limit) and 0.007 mg/l, respectively.

As described above, by using the radiant rapid heating furnace as the heating furnace, the polluted soil $A_1$ can be highly purified within a short time, as compared with the conventional rotary kiln.

In this example, the ambient temperatures in the first half and second half of the heating furnace (heating step) are set with a boundary at 700°C. However, setting of the ambient temperatures is not limited to this, and the temperatures can be appropriately changed according to the composition of the material to be treated, and the evaporation temperature of the material to be separately recovered, etc. The first half and second half simply mean the front part and back part of the heating step, not strictly mean the first half and second half of the heating step. Therefore, the passage time (retention time) of the material to be treated in the first half of the heating furnace is not necessarily equal to that in the second half thereof. For example, when the material to be treated contains large amounts of Ag and Hg which evaporate at relatively low temperatures, the first half of the heating furnace can be set to longer than that of the second half. Conversely, when the material contains large amounts of Pb and As which evaporate at higher temperatures, the second half of the heating furnace can be set to longer than that of the first half.

Furthermore, in this example, the ambient temperature of the heating furnace is set in the two steps on the front and back parts. However, in an operation, the temperature can be set in the three steps of the front part, an intermediate part, and the back part. In this case, for example, when the front part, the intermediate part and the back part are set to 500°C or less, 500 to 800°C and 800°C or more, respectively, Hg, As and Cd, and Pb can be separately recovered in the front part, the intermediate part and the back part, respectively. The intermediate part means a part between the front and back parts.

Example 2

In order to confirm the effect of a method comprising mixing a carbonaceous reducing agent and a metal oxide-containing material with the polluted soil $A_1$ as the material to be treated, and heating the resultant mixture, the experiment below was carried out.

Each of single soil (Comparative Example 1), a mixture (Comparative Example 2) containing 97 parts by mass of soil and 3 parts by mass of coke powder serving as the carbonaceous reducing agent, a mixture (Example 1 of this invention) containing 82 parts by mass of soil, 3 parts by mass of coke powder serving as the carbonaceous reducing agent, and 15 parts by mass of an iron ore composed of an metal oxide was formed in a pillow-like briquette sample of 39 mm x 20 mm x 12 mm (volume of about 6 $cm^3$) by compression molding using a press agglomerator. Each of the samples was heated at 1200°C (constant) in a $N_2$ atmosphere in a small tubular furnace for about 12 minutes to measure changes in the CO concentration in the atmosphere gas with time.

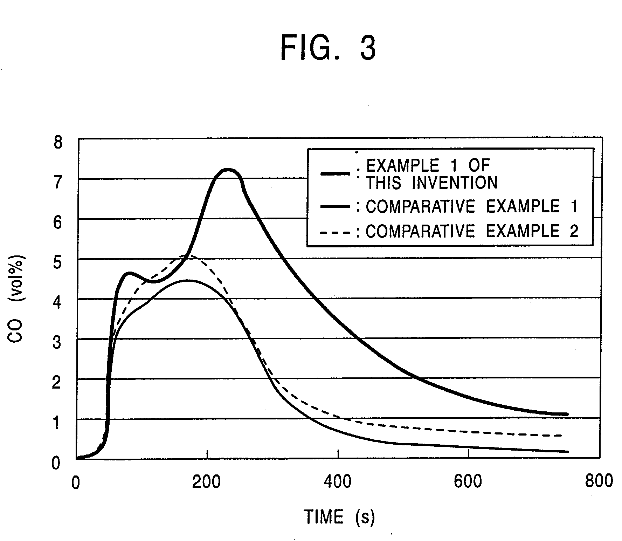

Fig. 3 shows the relationship between the elapsed time from sample charging in the tubular furnace and the CO concentration of atmosphere gas. An increase in the CO concentration is observed in the sample of single soil of Comparative Example 1, and this increase in the CO concentration is possibly due to the fact that the organic materials contained in the soil are decomposed by heating to generate CO gas. Therefore, when rapid heating of the material can be achieved, the heavy metals can be evaporated by reduction with high efficiency without the addition of a CO gas generating source to the material to be treated, like in the present invention. In the sample of Comparative Example 2 containing the soil and the coke powder, the CO concentration is less increased as compared with Comparative Example 1. Therefore, oxides of the heavy metals as the pollutants in a portion in direct contact with the coke powder are reduced, while reduction does not sufficiently proceeds in other portions out of direct contact with the coke powder. On the other hand, in the sample of Example 1 of this invention containing the soil, the coke powder and the iron ore, the CO concentration of the atmosphere gas is significantly increased, as compared with Comparative Examples 1 and 2. It is thus confirmed that a large amount of CO gas is generated. Therefore, reduction of the heavy metal oxides through the gas is promoted to permit removal of the heavy metals by reduction evaporation, and detoxification by insolubilization with high efficiency.

The briquette of Example 1 of this invention has a crushing strength of 530 N after heating, and is thus suitable as a roadbed, an aggregate, and the like.

Although, in this example, the material to be treated is soil, burned ash also can be treated as a material containing heavy metals and/or organic compounds to produce the same effect as described below in Example 3.

Example 3

Burned ash is heated by using the same apparatus as that used in Example 1. Each of two samples including single burned ash (Example 2 of this invention), and a mixture (Example 3 of this invention) containing 82 parts by mass of burned ash, 3 parts by mass of coke powder serving as a carbonaceous reducing agent, and 15 parts by mass of iron ore composed of a metal oxide was molded in a tablet of 20 mm in diameter x 15 mm in length, and then heated at an average ambient temperature of 1200°C in a rotary hearth furnace for a retention time of 12 minutes. Table 1 shows the Pb concentrations of the tablet before and after heating, and crushing strength of the tablet after heating. Table 1 indicates that the heavy metals of the burned ash can be removed by treatment.

Table 1

| | Pb concentration before heating (mg/kg) | Pb concentration after heating (mg/kg) | Crushing strength after heating (N/tablet) |
|---|---|---|---|
| Example 2 of this invention | 530 | 120 | 590 |
| Example 3 of this invention | 740 | 50 | Unmeasured |

Besides the iron ore, iron-making dust containing an iron oxide, such as blast furnace dust, converter dust, electric furnace dust, mill scales, mill sludge, pickling sludge, sintering dust, and the like, nonferrous oxides such as nickel oxide, manganese oxide, and the like may be used as the metal oxide. Besides the coke powder, coal, petroleum coke, waste carbides, RDF carbides, carbonaceous sludge, scrap tires, blast furnace dust, and the like may be used as the carbonaceous reducing agent. Particularly, the blast furnace dust is preferred because it contains an iron oxide (metal oxide) and a carbon content (carbonaceous reducing agent).

As can be seen from the above description, according to the present invention, heavy metals and/or organic compounds contained in polluted soil and/or burned ash can be sufficiently removed or detoxified with a high efficiency, as compared with a conventional method. Also, the apparatus used can be simplified to decrease apparatus cost and treatment cost.

**Claims**

1. A method of treating a heavy metal and/or organic compound comprising a heating step of heating a material containing a heavy metal and/or organic compound, in a radiant rapid heating furnace to purify the material.

2. A method of treating a heavy metal and/or organic compound accordig to claim 1, comprising an agglomeration step of agglomerating at least a portion of a material containing a heavy metal and/or organic compound, to form agglomerates, and a heating step of heating the agglomerates and the unagglomerated residue of the material in a radiant rapid heating furnace to purify the material.

3. A method of treating a heavy metal and/or organic compound according to claim 2, further comprising a screening step of screening the material to separate the material into an oversize portion and an undersize portion before the agglomeration step, the undersize portion being supplied to the agglomeration step, and the oversize portion being supplied to the heating step without the agglomeration step.

4. A method of treating a heavy metal and/or organic compound according to claim 1, 2 or 3, comprising a mixing step of mixing a carbonaceous reducing agent and a metal oxide-containing material with a material containing a heavy metal and/or organic compound, and a heating step of heating the resultant mixture in a heating furnace to purify the material.

5. A method of treating a heavy metal and/or organic compound according to any one of claims 1 to 4, wherein the material is heated at an ambient temperature of 700°C or more at least in the second half of the heating step.

6. A method of treating a heavy metal and/or organic compound according to claim 5, wherein the material is heated at an ambient temperature of 700°C or less in the first half of the heating step.

7. A method of treating a heavy metal and/or organic compound according to any one of claims 1 to 6, wherein the radiant rapid heating furnace is a rotary hearth furnace.

# FIG. 1

# FIG. 2

MOVEMENT DIRECTION

GAS FLOW DIRECTION

EP 1 354 646 A1

# FIG. 3

**European Patent Office**

## EUROPEAN SEARCH REPORT

Application Number

EP 03 00 6754

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 802 424 A (F. MCGINNIS) 7 February 1989 (1989-02-07) * column 1, line 5 - column 3, line 26 * * figure * | 1,5,6 | B09C1/06 B09B3/00 |
| X | US 4 667 609 A (R. HARDISON) 26 May 1987 (1987-05-26) * column 5, line 39 - column 8, line 3 * * column 12, line 30 - column 14, line 29 * * figures * | 1,5,6 | |
| X | EP 0 724 918 A (SHINMAYWA) 7 August 1996 (1996-08-07) * page 5, line 56 - page 6, line 49 * * page 7, line 39 - line 58 * * figure 1 * | 1,4 | |
| A | PATENT ABSTRACTS OF JAPAN vol. 1998, no. 08, 30 June 1998 (1998-06-30) & JP 10 080675 A (MITSUI ENG &AMP;SHIPBUILD CO LTD), 31 March 1998 (1998-03-31) * abstract * | 1,2 | TECHNICAL FIELDS SEARCHED (Int.Cl.7) B09C B09B F23G A62D |
| A | US 5 612 008 A (D. KIRK) 18 March 1997 (1997-03-18) * column 2, line 24 - column 3, line 31 * | 1,2 | |
| A | PATENT ABSTRACTS OF JAPAN vol. 2000, no. 26, 1 July 2002 (2002-07-01) & JP 2001 259607 A (SUMITOMO HEAVY IND LTD), 25 September 2001 (2001-09-25) * abstract * | | |

The present search report has been drawn up for all claims

| Place of search | Date of completion of the search | Examiner |
|---|---|---|
| THE HAGUE | 24 July 2003 | Laval, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 354 646 A1

## ANNEX TO THE EUROPEAN SEARCH REPORT
## ON EUROPEAN PATENT APPLICATION NO.

EP 03 00 6754

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2003

| Patent document cited in search report | | Publication date | Patent family member(s) | | Publication date |
|---|---|---|---|---|---|
| US 4802424 | A | 07-02-1989 | NONE | | |
| US 4667609 | A | 26-05-1987 | NONE | | |
| EP 724918 | A | 07-08-1996 | EP | 0724918 A1 | 07-08-1996 |
| | | | KR | 201520 B1 | 15-06-1999 |
| | | | WO | 9605002 A1 | 22-02-1996 |
| JP 10080675 | A | 31-03-1998 | NONE | | |
| US 5612008 | A | 18-03-1997 | CA | 2182168 A1 | 28-01-1997 |
| JP 2001259607 | A | 25-09-2001 | NONE | | |

EPO FORM P0459

For more details about this annex : see Official Journal of the European Patent Office, No. 12/82

13